# EUROPEAN PATENT APPLICATION

(11) **EP 1 584 368 A1**
(43) Date of publication of application: **12.10.2005**
(21) Application number: 04425258.3
(22) Date of filing: 07.04.2004
(51) Int. Cl.: B01D 53/88, E01C 1/00

(54) **An apparatus and process for activating photocatalytic reactions in constructions subject to limited lighting**

(71) Applicant: Global Engineering and Trade S.r.L., 20122 Milano (IT)
(72) Inventor: Terruzzi, Claudio, 20122 Milano (IT)
(74) Representative: Lunati, Vittoriano

(57) **Abstract**

There is provided an apparatus for activating photocatalytic reactions in a construction (2) subject to limited lighting, comprising means (3) for coating the construction (2) which include photocatalytic substances, and projecting members (5), including at least one emitting unit (6) of UV rays, such as a Wood lamp designed to irradiate the coating means (3) in a way not perceptible by the human eye. The process consists in applying to a construction (2) coating means (3) which include photocatalytic substances and in irradiating artificially the coating means (3) with UV rays selected so that they have a wavelength of between 320 nm and 400 nm.

## Description

The subject of the present invention is an apparatus and a process for generating photocatalytic reactions in constructions subject to limited lighting, as specified in the preamble of the independent claims.

There is currently known the process of photocatalysis which enables oxidation of pollutant or soiling substances, and there have already been studied products the composition of which leads to the activation of photocatalytic reactions.

By catalysis is meant the phenomenon whereby certain chemical reactions are speeded up by means of substances referred to as catalysts, and in particular the term photocatalysis is used when the phenomenon of catalysis is strictly connected to the presence of electromagnetic radiation.

Forming part of the latter are solar radiation, which includes in particular visible light radiation, and radiation having a wavelength near to the visible, such as infrared and ultraviolet radiation.

To understand the phenomenon of photocatalysis it is necessary to consider that semiconductors, such as for example titanium dioxide (TiO₂), are characterized by the presence of two bands in which the electrons (e⁻) reside: the valence band (VB) and the conduction band (CB). The energy levels that characterize said bands are sufficiently close, such as to enable passage of electrons from the valence band, in which they reside when they are not excited, to the conduction band. This passage occurs when the electrons are excited by an external impulse.

Said external impulse may come, for example, from a photon (hv), which is nothing other than a quantum of electromagnetic energy.

In fact, the absorption of photons, with an energy greater or equal to the difference of the energy levels that characterize the bands of the semiconductor mentioned above, gives rise to a transfer of electrons from the valence band to the conduction band.

The electrons that are transferred to the conduction band constitute a negative electrical charge that readily binds to other molecules present in the environment.

Simultaneously, in the valence band there is created a positive electrical charge, known as electron hole (h⁺), due to the lack of balancing of the positive electrical charges, constituted by the protons, by the negative electrical charges constituted by the electrons. The material will thus tend to assume electrons present in the environment.

In turn, the electrons assumed in the valence band can be transferred, if excited by the energy of a photon, into the conduction band, and the process can continue indefinitely without there being any loss of electrons by the photocatalytic substance constituted by the semiconductor.

In the process of photocatalysis under examination, the electrons present in the conduction band preferably bind to the oxygen molecules (O₂) present in atmosphere, constituting negative ions (O₂⁻ or O⁻).

At the same time, the semiconductor preferably assumes electrons from the OH⁻ ions, which have formed as a result of the dissociation of the molecules of water (H₂O) present in the atmospheric humidity, which after yielding the electron assume a neutral electrical charge (OH molecules).

The ions created by the process of photocatalysis O₂⁻ and O⁻ are highly reactive and bind to the molecules of the pollutant substances present in the environment, in particular to nitrogen oxides (NOₓ), which are principally nitrogen monoxide and nitrogen dioxide (NO or NO₂), to form negative ions NO₃⁻, or else with carbon monoxide (CO) to give rise to a molecule of carbon dioxide CO₂.

The negative ions NO₃⁻ in turn bind easily to the positive ions of calcium or sodium (Ca⁺⁺ or Na⁺) dissociated from the compounds (calcium carbonate, chalk, etc.) present in the basic matrix of which the walls or the asphalt on which the photocatalytic coatings are laid are formed.

At the end of the process, salts such as calcium nitrate Ca(NO₃)₂ and sodium nitrate NaNO₃ are formed, which precipitate into the environment.

In summary, the photocatalytic coating acts through the photocatalytic chemical reaction that enables, in the presence of light, air and atmospheric humidity, oxidation and conversion of the harmful substances, which come into contact with the surface of the product, into non-harmful calcium nitrate and calcium carbonate and sodium nitrate and sodium carbonate.

These latter substances are already present in nature, for example in commercially available mineral water, and are in any case produced in absolutely insignificant amounts, measurable in parts per million.

Not only are the nitrogen and carbon oxides oxidized through the photocatalytic process, but other harmful substances are oxidized, such as Benzene, Toluene, Ethyl-benzene, M-xylene, Ozone, Sulphur dioxide, Formaldehyde, Acetaldehyde, PM x, Methanol, and Ethanol.

Various tests have been conducted for evaluation of the abatement of nitrogen oxides and other pollutant substances.

An important test has been conducted by the present applicant at Segrate (Province of Milan): a stretch of asphalted road having a length of 250 m and a width of 17 m, for a total of approximately 4000 m², was coated with a photocatalytic-effect coating, in a traffic context of approximately 15,000 motor vehicles per day.

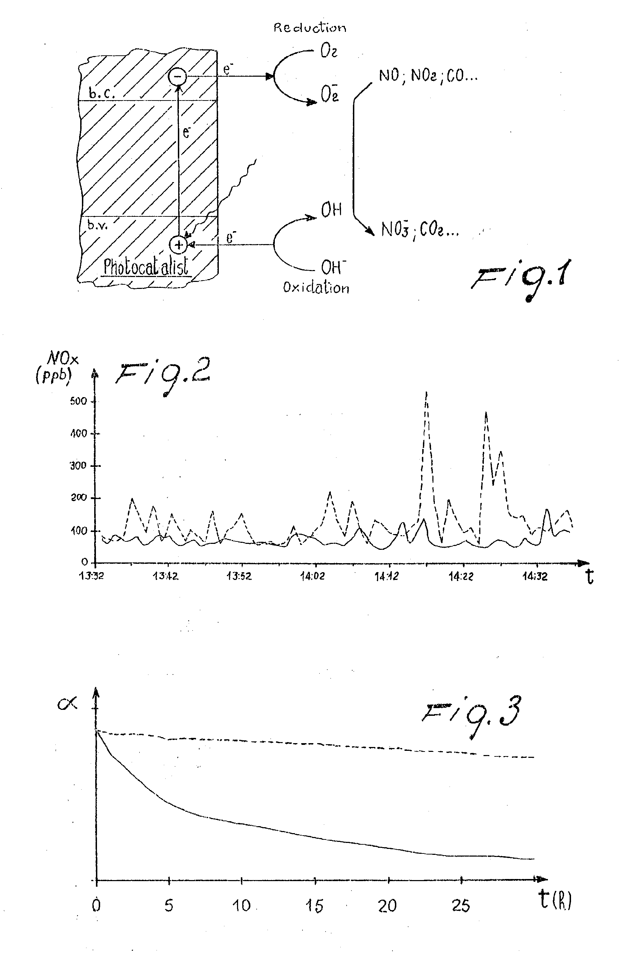

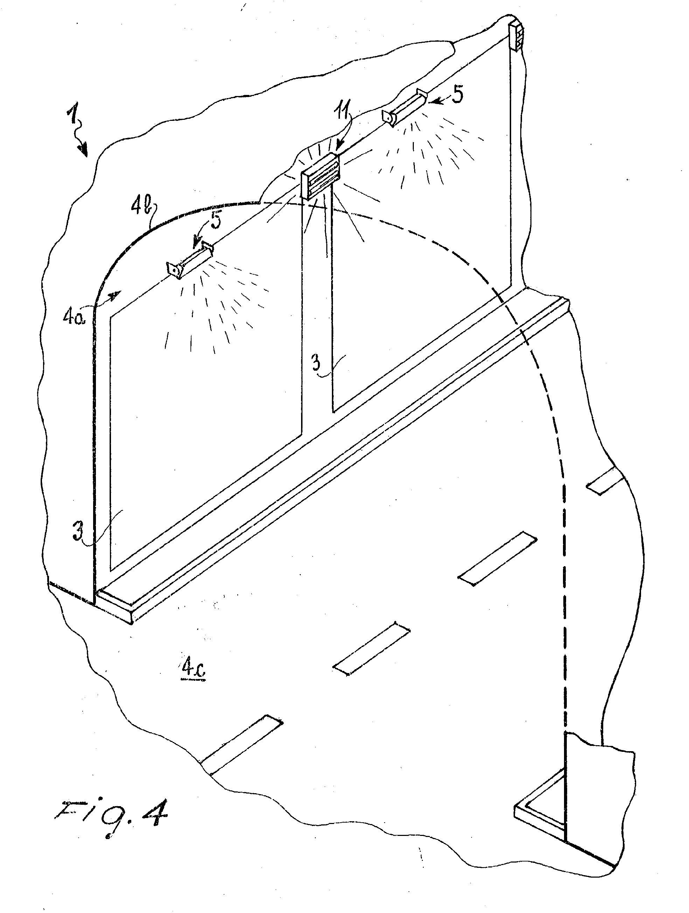

Through the use of two pieces of chemi-luminescence machinery, positioned one on one part not treated of the asphalt and the other in the area coated with the photocatalytic-effect coating, there were noted reductions in the pollutant elements of up to 62%, as appears from the graph of Figure 2. Further advantages of the process of photocatalysis were found, in addition to the oxidation and decomposition of the pollutant substances: for example, its self-cleaning or anti-soiling effect from atmospheric pollutants and maintenance of the aesthetic characteristics over time.

For evaluation of this self-cleaning effect, in one of the many tests performed, a colouring agent was chosen as an element demonstrating the "soiling" effect of pollutant agents. By way of example, Rhodamine B was chosen on account of its molecular structure, which has characteristics resembling some of the most widespread atmospheric pollutants.

Laboratory specimens, consisting of ordinary blocks of cement, were used as substrates for applications of the same type of photocatalytic-effect coating as the one used previously.

A film of colouring agent was deposited on the samples thus prepared.

At regular intervals of time, colorimetric analyses were carried out on the samples under examination and, for comparison, on similar specimens not applied with photocatalytic-effect coating likewise treated with colouring agent.

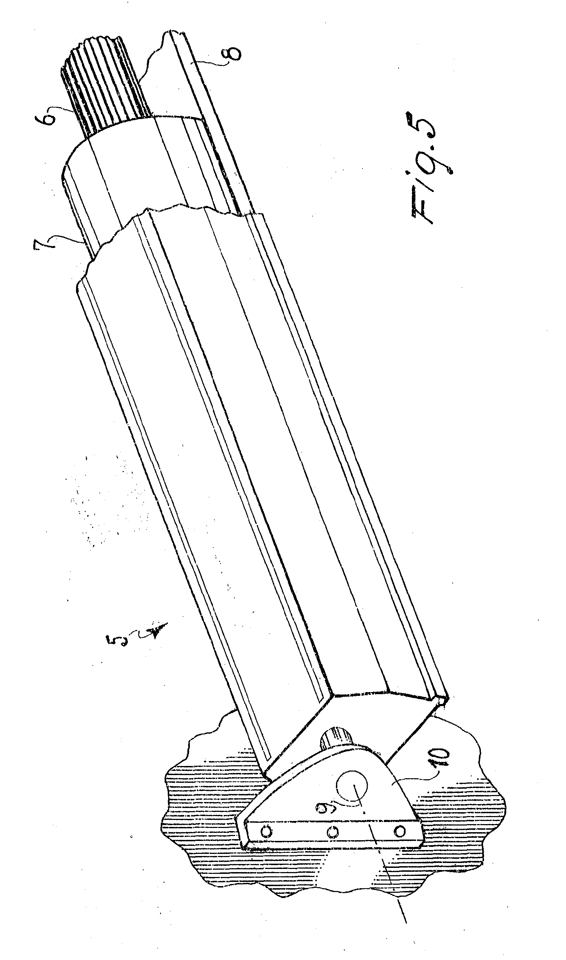

The experimental data obtained have demonstrated that the reduction in the colorimetric value over time presents a much more marked trend on the specimens treated with the photocatalytic-effect coating as compared to the ones not treated therewith, as emerges from the graph illustrated in Figure 3.

The possible application of a photocatalytic-effect coating has been evaluated also from an economic standpoint.

In particular, a cost/benefit analysis established that one square kilometre of photocatalytic-effect coating abates approximately 30 tonnes and, considering that a catalysed motor vehicle has a rate of emission of nitrogen oxides of approximately 0.4 g/km, it can travel 75 million km.

Assuming that a vehicle travels on average 10,000 km/year in urban traffic, there would be an absorbed amount of nitrogen oxides equal to the amount emitted by 7,500 motor vehicles in a year.

According to the same analysis, it has been established that the amortization of the costs of application of the photocatalytic-effect coating takes two or three years, set against which are the inestimable social and environmental benefits.

For all these reasons, photocatalytic-effect coatings are increasingly widely used.

Such applications regard, in addition to roads, fronts of building, balconies, cantilever roofs, walls, prefabricated concrete elements, architectural concretes and natural stones.

Notwithstanding all the above qualities, the known art described above presents certain drawbacks.

In fact, sunlight plays a fundamental role in the development of the photocatalytic reaction, and, in the absence of sunlight, the reaction does not take place.

It would instead be desirable to use the photocatalytic-effect coating also for semi-closed or covered environments and indoor environments, specifically: underpasses or subways, tunnels, covered garages, car parks, arcades, kitchens, bathrooms, offices, stair wells, hospitals, cinemas, theatres, etc.

It would moreover be convenient for the photocatalytic effect to be obtained also at night, for example on roads.

An attempt has already been made to solve the drawbacks referred to via lighting with light that substantially reproduces sunlight and its level of intensity. Said solution obviously leads to obtaining the desired process of photocatalysis, but it is evident that a lighting with artificial light of a solar type, as regards quality and intensity, entails a very considerable expenditure in terms of electric energy.

Above all, a lighting comparable to the one obtained with sunlight during night-time hours is normally perceived as excessive, in addition to being costly and difficult to achieve.

It should thus be noted that a lighting of this sort cannot be implemented in certain environments, where the level of light is already set according to criteria dictated by other requirements.

This is the case of night-time lighting of hospital areas, dwellings, roads surrounding wild-life parks, astronomic observatories and roads surrounding them, etc., in which the lighting must be almost totally absent. It is also the case of road tunnels, where the lighting is already studied according to criteria of road safety.

There thus remains unsolved the technical problem of how to provide an efficient apparatus for generating photocatalytic reactions for constructions subject to limited lighting.

In this situation, the technical task underlying the present invention is to devise an apparatus and a process capable of overcoming the drawbacks referred to above.

Within the scope of said technical task, an important aim of the invention is to obtain activation of photocatalytic reactions, without modifying the amount of visible light.

Another important aim of the invention is to minimize the expenditure of energy for artificial lighting of the areas in which it is desired to obtain the photocatalytic reaction.

The technical task and the aims specified above are achieved by an apparatus and process for activating photocatalytic reactions in conditions of limited lighting, as claimed in the annexed main claims.

Preferred embodiments are highlighted in the dependent claims.

Further characteristics and advantages of the invention are further clarified hereinafter in the detailed description of preferred embodiments of the invention, with reference to the attached drawings, in which:
Fig. 1 is a diagram illustrating the process of yield of electrons by a photocatalytic substance;
Fig. 2 illustrates a graph obtained experimentally, highlighting, with a solid line the amount of nitrogen oxides existing in the case corresponding to an asphalt coated with a photocatalytic substance, and with a dashed line the oxides in the absence of the photocatalytic substance, there appearing, on the abscissa, the hour of the day and, on the ordinate, the amount of nitrogen oxides in parts per billion;
**Fig. 3** represents a graph, highlighting, with a solid line the variation in the colorimetric parameters, indicated by a on the ordinate, as a function of the time t of exposure to sunlight expressed in hours, indicated on the abscissa, in a photocatalytic-effect coating, and with a dashed line the variation in the colorimetric parameters in a traditional coating;
**Fig. 4** represents a tunnel illuminated with a combination of visible-light lamps and of projecting members provided with UV-emitting units;
**Fig. 5** illustrates an orientable member for projecting UV rays;
**Fig. 6** illustrates, by means of a graph, the wavelengths, on the abscissa, and the intensities of emission, on the ordinate, of UV rays emitted by a Wood lamp bearing the coding HQV 125 and marketed by Osram;
**Fig. 7** illustrates, by means of a graph, the wavelengths, on the abscissa, and the intensities of emission, on the ordinate, of UV rays emitted by a Wood lamp bearing the coding L 18/73, which is also marketed by Osram; and
**Fig. 8** is a graph which presents schematically the effects of UV rays in contact with the skin, there appearing on the abscissa the wavelength and on the ordinate the relative efficiency of the electromagnetic radiation in causing erythema solare.

With reference to the above mentioned figures, the apparatus according to the invention is designated, as a whole, by the reference number 1.

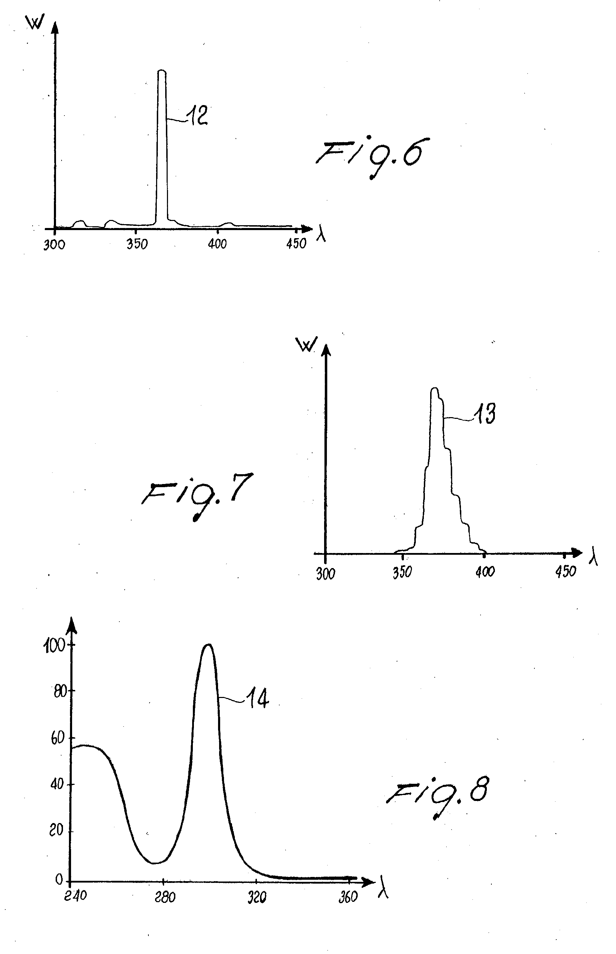

Broadly speaking, it is applied to a construction **2,** which - by way of preferred example - in Figure 4 is a road tunnel.

The tunnel has an internal surface defined by side walls **4a,** a vault **4b** and also a roadbed **4c**.

Said tunnel is at least internally and at least in part coated with appropriate coating means 3, including a photocatalytic substance.

In said construction 2 one or more projecting members **5** are set, each including one or more UV-emitting units **6.**

The emitting units 6 are preferably constituted by Wood lamps, described in greater detail in what follows.

In detail, the projecting members 5 comprise means for directing UV rays, such as a reflecting element **7** and a UV-transparent element **8.**

The directing means then preferably also comprise supports **10,** which constrain the projecting member 5 to a resting surface preferably forming part of the construction 2 itself or of the ground or of other constructions in the proximity thereof. In the case illustrated in Figure 4, the projecting members 5 and the corresponding supports 10 are set on the top of the side walls 4a.

The supports 10 are connected to the projecting member 5 in just two points, through which an axis **9** parallel to the resting surface passes.

Said solution renders the projecting members 5 orientable according to the desired direction, by rotation about the axis 9, and it is thus possible to illuminate the coating means 3 selectively.

The projecting members can be set in combination with lighting devices **11,** which emit visible light.

In further detail, it is to be noted that the coating means 3 are conveniently constituted by mortars or paints or panels or masonries applied to the constructions 2 or originally forming part thereof.

In the construction illustrated in Figure 4, the coating means 3 are squares of mortar which include a photocatalytic substance and are set out in an area corresponding to the side walls 4a of the tunnel.

The coating means 3 include catalytic substances consisting of titanium dioxide (TiO₂), preferably in the crystallographic form known as anatase. Wood lamps are lamps in themselves known, which emit UV rays. Said lamps generate UV rays by means of a high-pressure mercury arc, provided with a filter made of barium silicate and mercury oxide, which enables selective emission of UV rays of a wavelength of between 320 nm and 400 nm.

In detail, two types of Wood lamps are preferably chosen, already commercially available and currently used for laboratory tests, as detailed in what follows: the type bearing the coding HQV 125 and the type bearing the coding L 18/73, both marketed by Osram.

Figure 6 illustrates the wavelengths λ, on the abscissa, and the intensities of emission, expressed in watts, on the ordinate, of the UV rays emitted by the Wood lamp HQV 125, and which define a first curve **12.**

Figure 7 illustrates the wavelengths λ, on the abscissa, and the intensities of emission, expressed in watts, on the ordinate, of the UV rays emitted by the Wood lamp L 18/73, and which define a second curve **13.**

As is known, ultraviolet radiation or UV rays is a form of electromagnetic radiation not perceptible to the human eye.

The quantities that characterize electromagnetic radiation are principally the wavelength (λ) and the frequency (v), which are inversely proportional to one another, and the energy (hv), which is directly proportional to the frequency. Visible light radiation has a wavelength substantially of between 400 nm and 750 nm; infrared radiation has a wavelength longer than 750 nm; and ultraviolet radiation has a wavelength shorter than 400 nm.

By convention, ultraviolet radiation is divided into three types: near-UV rays (from 400 nm to 320 nm), referred to as UVA rays and bordering on the wavelengths of visible light; far-UV rays (from 320 nm to 290 nm), referred to as UVB rays; and extreme-UV rays (from 290 nm to 200 nm or less), referred to as UVC rays.

It has been discovered that the photocatalytic reactions are activated by UV rays, in particular by UVA rays, since UVB rays and UVC rays emitted by the sun are captured by the particles of ozone present in the higher layers of the earth's atmosphere.

Consequently, irradiation with UVA rays of the coating means containing photocatalytic substances causes the desired reaction of photocatalysis, without altering the quantity of visible light.

Some UV rays can raise problems if they irradiate human skin for a long time (approximately one or more hours).

These are the same problems that sunlight can cause on summer days. However, harmful UV rays are UVB rays and UVC rays of short wavelength (λ < 300 nm), which do not form part of the wavelengths emitted by Wood lamps, as is confirmed by Figures 6 and 7, which show that the curves 12 and 13 have a peak of intensity for emissions comprised between 320 nm and 400 nm and are close to zero for the other emissions.

Said UV rays of a wavelength of between 320 nm and 400 nm are not harmful at all.

Figure 8 in fact presents a graph that is a schematic representation of the effects of UV rays in contact with the skin, the abscissa representing the wavelength λ and the ordinate the efficiency (from 0 to 100) of the electromagnetic radiation in causing erythema solare.

There is clearly evident a third curve **14** that is close to zero for the wavelengths comprised between 320 nm and 400 nm.

However, it may be required not to diffuse the UV rays in the environment and not to irradiate people with said rays.

It is possible to meet this requirement by directing the UV rays, orienting them in an appropriate direction by means of the projecting members 5.

In environments in which the lighting is already set according to criteria dictated by other needs, it is preferable for the projecting members 5 to be set in combination with the existing lighting devices 11.

The arrangement in combination can envisage that the projecting members 5 will be set alongside or associated to the lighting devices 11 or lamps for visible light, or else also that in each of the projecting members there will be housed both units 6 for emitting UV rays, and units for emitting visible light. In both cases, the emission of visible light is provided, as regards level of emission, in a way completely separate from and independent of the emission of UV rays.

Purely by way of example, it has been noted that an advantageous technical solution may be that of combining an emission of UV via Wood lamps capable of irradiating approximately one watt per square metre at a distance of a metre from the surface to be irradiated, and an emission of visible light via metallic-iodide lighting devices having a power ranging from one hundred to four hundred watts, according to the visible light required locally.

In tunnels in particular, where the apparatus according to the present invention proves necessary, in view of the danger of excessive concentration of pollutant substances, the units for emitting UV rays, which are invisible, have the quality of not interfering with lighting devices 11 already studied by specialized technicians according to requirements of gradual lighting and sharpening of edges, lines, signs, etc.

In particular, in such tunnels, the lighting is maximum at the entrance and at the exit and is lower at the centre, where it is arranged considering vehicles with their lights turned on and so as to be substantially uniform and prevent any dazzling of drivers.

In road tunnels 2, moreover, the coating means 3 can be applied to the side walls, to the roadway, and to the vaulted ceiling, thus guaranteeing an ample surface available, which results in an excellent yield of the process of photocatalysis.

The invention comprises a new process for generating photocatalytic reactions on constructions subject to limited lighting.

Envisaged therein is application to constructions 2 of coating means 3 provided with photocatalytic substances, and artificial irradiation of said coating means with UV rays.

From among UV rays emitted artificially the ones with a wavelength of between 320 nm and 400 nm are selected.

A variant of said process is provided specifically for the sites where there already exists a fairly strong artificial lighting.

The process consists first of all in applying to these constructions coating means such as mortars, paints, varnishes and the like, or else massive concrete elements, which include substances.

Of these photocatalytic substances, thus applied, an important functional parameter is considered: the operative value or reference value of the intensity of the electromagnetic emission required for activating the photocatalytic substances themselves in a satisfactory way.

The said operative value or reference value is, for example, supplied as characteristic datum of the photocatalytic substances, or else identifiable in a highly practical and simple way as a mean value of the intensity of the lighting (measurable in lux) obtained with daylight in the area surrounding the constructions.

There is then provided a measurement of the lighting present at night or inside said constructions, namely lighting with visible light already prearranged (which is also measurable in lux).

Once these two values are known, the difference between them is calculated, i.e., the difference between the desired or appropriate intensity of electromagnetic emission, with reference to the photocatalytic substances, and the existing intensity of emission, for limited lighting.

Finally, in the last step, there is envisaged emission of UV rays not belonging to the range of visible light, in a quantity proportional to said difference.

From among the UV rays, the ones having a wavelength of between 320 nm and 400 nm are selected.

Said UV rays are emitted by means of "black" lamps such as Wood lamps, conveniently applied exclusively on the surfaces of said constructions provided with photocatalytic substances.

This process enables optimal levels of emission to be reached, limiting as much as possible the costs, and any operations to be carried out, without any interference with the visible lighting, which remains unaltered.

The invention moreover teaches a new use of the Wood lamp: use thereof for activation of photocatalytic reactions.

Wood lamps, in fact, are normally used for different purposes, such as: identification of defects on mechanical members; analysis of the purity of textile materials; identification of any sophistication of foodstuffs; identification of forged banknotes and postage stamps; and special lighting effects in discotheques and shop windows.

Amongst the known uses, the use proposed herein is not included. This can instead be applied, to considerable advantage, in road tunnels and is particularly convenient in that it renders possible an optimal level of visible lighting and the optimal level of irradiation of photocatalytic substances in a way that said levels are altogether independent from one another and do not in the least interfere with one another.

The invention enables important advantages to be achieved.

In fact, it is possible to activate photocatalytic reactions also in interiors, or at night, when the light of the sun does not supply the necessary radiation for activation of the reaction described.

The present invention moreover enables activation of the photocatalytic reactions without having to modify visible light.

It is thus of fundamental importance in environments in which the lighting is already set according to criteria dictated by other needs, such as for example, as has been said: road tunnels, car parks, open-air cinemas, hospitals, dwellings, roads surrounding wild-life parks, astronomic observatories and their surrounding roads.

A further advantage of the invention is provided by the fact that irradiation with an emitting unit 6, such as the Wood lamp, enables minimum expenditure of energy for activation of the photocatalytic reaction.

In fact, a possible lighting with white light having a spectrum of electromagnetic frequencies similar to the solar spectrum involves a considerable expenditure in terms of energy, given that said spectrum of frequencies is wide and that not all the frequencies emitted are necessary for activation of the photocatalytic reaction.

The orientable projecting members then enable irradiation exclusively of the areas containing photocatalytic substances, with consequent further energy saving.

## Claims

1. Apparatus for activating photocatalytic reactions in a construction subject to limited lighting, comprising means for coating said construction and photocatalytic substances contained in said coating means, **characterized in that** it comprises projecting members including at least one UV-emitting unit suitable for irradiating said coating means in a way not perceptible by the human eye.

2. Apparatus according to claim 1, in which said emitting unit is a Wood lamp.

3. Apparatus according to claim 1, in which said projecting members comprise means for directing said UV rays suitable for enabling a selective irradiation of said coating means.

4. Apparatus according to claim 1, in which said projecting members are pre-arranged in combination with lighting devices designed to irradiate visible light.

5. Apparatus according to claim 1, in which said emitting unit is provided in said projecting members in combination with lighting devices designed to irradiate visible light.

6. Apparatus according to claim 1, in which said coating means are chosen among paints, mortars, panels, and walls.

7. Apparatus according to claim 1, in which said photocatalytic substances comprise titanium dioxide in the form of anatase.

8. Apparatus according to claim 1, in which said construction is a road tunnel having an internal surface, in which said coating means cover at least one portion of said internal surface, and in which said projecting members are in a position corresponding to said internal surface.

9. Apparatus according to claim 8, in which said road tunnel comprises side walls and in which said projecting members are positioned in a way suitable for irradiating said side walls selectively.

10. Process for activating photocatalytic reactions in a construction subject to limited lighting, **characterized in that** it consists in applying to said construction coating means which include photocatalytic substances, and in irradiating artificially said coating means with non-visible UV rays.

11. Process according to claim 10, in which said UV rays are selected with a wavelength of between 320 nm and 400 nm.

12. Process for activating photocatalytic reactions in a construction subject to limited lighting, **characterized in that** it consists in: applying to said construction coating means which include photocatalytic substances; determining the local value of said lighting on said coating means; calculating the difference between said local value and a predetermined value of lighting adapted to enable a satisfactory activation of said photocatalytic reactions; and irradiating with UV rays not belonging to the range of visible light said coating means with an intensity substantially proportional to said difference.

13. Process according to claim 12, in which said UV rays are selected with a wavelength of between 350 nm and 400 nm.

14. Use of a Wood lamp for activating photocatalytic reactions in a construction provided with coating means which include photocatalytic substances.

15. Use of a Wood lamp according to claim 14 for activating photocatalytic reactions in road tunnels.

16. Use of a Wood lamp according to claim 14 in combination with lighting devices designed to irradiate visible light.
